# NEUE EUROPÄISCHE PATENTSCHRIFT

(11) **EP 1 396 364 B2**
(45) Veröffentlichungstag und Bekanntmachung des Hinweises auf die Entscheidung über den Einspruch: **10.09.2008**
(45) Hinweis auf die Patenterteilung: 08.06.2005
(21) Anmeldenummer: 03016659.9
(22) Anmeldetag: 31.07.2003
(51) Int. Cl.: B60J 7/04, B60J 7/05

(54) **Führungsmechanik für einen Deckel eines Schiebehebedachs**
Drive mechanism for a panel of a tilt-sliding roof
Mécanisme d'entraînement d'un panneau mobile de toit pivotant et coulissant

(30) Priorität: 03.09.2002 DE 10240636
(43) Veröffentlichungstag der Anmeldung: 10.03.2004
(73) Patentinhaber: ArvinMeritor GmbH, 63128 Dietzenbach (DE)
(72) Erfinder: Bachmann, Hubert, 67125 Dannstadt (DE); Weiss, Edgar, 63755 Alzenau (DE)
(74) Vertreter: Kitzhofer, Thomas

(56) Entgegenhaltungen:
- EP-A- 0 638 452
- DE-A- 10 057 012
- DE-A1- 3 706 917
- DE-C- 10 009 387
- DE-C- 19 713 348
- DE-C1- 4 405 742
- DE-C1- 19 623 945
- DE-C2- 3 417 098
- DE-U- 29 811 016

## Beschreibung

Die Erfindung betrifft eine Führungsmechanik für einen Deckel eines Kfz-Schiebehebedachs gemäß dem Oberbegriff des Anspruchs 1.

Eine gattungsgemäße Führungsmechanik ist aus der DE 34 17 098 C2 bekannt. Diese weist eine Kulisse mit einem hinteren Niederhalter auf, der in der Grundposition an einer mit der Profilschiene fest verbundenen hinteren Führungsfläche anliegt und so die Kulisse mit der Profilschiene verriegelt. Um beim Ausstellen des Deckels eine Horizontalverschiebung der Kulisse zu verhindern, ist ein vorderer Niederhalter vorgesehen, der während der Ausstellbewegung entlang einer vorderen Führungsfläche geführt wird und auch in der Ausstellposition an dieser anliegt.

Die DE 44 05 742 C1 beschreibt eine Führungsmechanik, bei der die Führungskulisse ein Hebel ist, der üblicherweise an seinem vordere Ende schwenkbar in einem in der Profilschiene untergebrachten Gleitschuh aufgenommen ist. Die Führungskulisse ist direkt oder indirekt mit dem Deckel gekoppelt. Auf zumindest einer ihrer Seitenflächen ist eine Kulissenbahn vorgesehen, längs der ein verfahrbarer Kulissenstein beweglich ist. Durch das Bewegen dieses Kulissensteins wird die Führungskulisse auf- und abgeschwenkt, was zum Ausstellen und Absenken des Deckels führt. Der Deckel und die Führungskulisse müssen in der ausgestellten Position gegen horizontales Verschieben in Fahrzeuglängsrichtung (Verschieberichtung) lagegesichert sein. Dies gilt auch für die Grundstellung, d.h. wenn der Deckel den Dachausschnitt schließt. Im Stand der Technik ist für diese Lagesicherung ein federnd angestellter Hebel vorgesehen, der in eine lokale Ausnehmung in der Profilschiene eingreift. Der Hebel sitzt auf einem Lagerteil, an dem die am hinteren Rand des Deckels vorgesehene Wasserablaufrinne befestigt ist. Mit diesem Lagerteil ist die Führungskulisse über einen Zwischenhebel permanent gekoppelt.

Die Erfindung schafft eine Führungsmechanik für einen Deckel eines Fahrzeugschiebehebedachs, die einfach ausgebildet ist, wenig Teile benötigt und eine sichere Positionierung der Führungsmechanik und des Deckels in der ausgestellten Position gewährleistet.

Dies wird durch eine Führungsmechanik mit den Merkmalen des Anspruchs 1 erreicht. Bei der erfindungsgemäßen Führungsmechanik greift die Führungskulisse in der Ausstellposition unmittelbar in die Profilschiene ein und wird in ihr formschlüssig verriegelt, so daß ein sehr kurzer Kraftflußweg und kurze Toleranzketten erreicht werden. Zudem können ggf. Bauteile gespart werden oder Bauteile weniger stabil ausgelegt werden, was für ein geringeres Gewicht der Führungsmechanik sorgt. Im Bereich des hinteren Randes des Deckels ist eine quer zum Fahrzeug verlaufende Wasserablaufrinne vorgesehen. Diese wird längs der Profilschiene bei Verschieben des Deckels mit verschoben. Die Wasserablaufrinne ist mit einem längs der Profilschiene verschiebbaren hinteren Lagerteil verbunden, wobei sie aber auch einstückig mit dem Lagerteil verbunden sein kann. Lagerteil und Ablaufrinne sind in der Ausstellposition in horizontaler Verschieberichtung vollständig von der Führungskulisse entkoppelt und haben eine eigene Positionssicherung. Dies erlaubt es, den im Stand der Technik vorgesehenen Zwischenhebel komplett wegzulassen, der im Stand der Technik eine permanente Koppelung zwischen der Führungskulisse und der Wasserablaufrinne vorsah. Dies schafft einen verringerten Bauraum, ein geringeres Gewicht und weniger Einzelteile.

Vorzugsweise ist die Führungskulisse auch in der Grundposition direkt in der Profilschiene so verriegelt, daß die Führungskulisse an einer Horizontalverstellung gehindert ist.

Gemäß der bevorzugten Ausführungsform wird die Führungskulisse in der abgesenkten Stellung aber aus dem verriegelnden Eingriff in die Profilschiene herausbewegt, um eine Horizontalverschiebung zu erlauben.

Vorzugsweise hat die Führungskulisse wenigstens einen Fortsatz, der zum Verriegeln in eine lokale Ausnehmung in der Profilschiene eingreift. Dieser Fortsatz kann beispielsweise einstückig angeformt sein. Natürlich wäre es auch umgekehrt möglich, daß die Profilschiene einen Fortsatz hat, der in eine Ausnehmung in der Führungskulisse einrastet.

Die direkte Verriegelung zwischen der Führungskulisse und der Profilschiene in der Ausstellposition ist vorzugsweise die einzige Sicherung gegen horizontales Verschieben der Führungskulisse nach hinten (in Richtung Fahrzeugheck).

Die bevorzugte Ausführungsform sieht ferner vor, daß die Führungskulisse im Bereich ihres vorderen Endes eine Schwenklagerung hat und der Fortsatz nahe des vorderen Endes vorgesehen ist.

Die Profilschiene hat z.B. ein C-förmiges Profil, mit oberen, aufeinander zulaufenden Stegen. In wenigstens einem Steg ist eine lokale Ausnehmung vorgesehen, in die die Führungskulisse bei Erreichen der verriegelten Stellung eindringt. Durch die lokale Ausnehmung muß die Profilschiene keine kompliziert angeformten Verriegelungshaken oder dergleichen aufweisen und bleibt einfach herstellbar.

Der Fortsatz gelangt in der abgesenkten Position in den durch die Profilschiene umschlossenen Raum, d.h. er liegt im Inneren der Profilschiene und ist nach einem horizontalen Verschieben mittels der Profilschiene selbst an einer Vertikalbewegung gehindert. Der Fortsatz würde gegen die Profilschiene anschlagen, wenn die Führungskulisse nach oben oder nach unten bewegt wird. Somit ist der Fortsatz nicht nur eine Sicherung gegen horizontale Bewegung in der ausgestellten Position und vorzugsweise auch in der Grundposition, sondern auch eine Sicherung gegen vertikales Verschieben in der abgesenkten Position.

Um jedoch sicherzustellen, daß die Wasserablaufrinne mit ihrem Lagerteil zusammen mit der Führungskulisse und dem Deckel horizontal nach hinten verschoben wird, ist bevorzugt vorgesehen, daß in der Grund- und in der abgesenkten Position die Führungskulisse in das Lagerteil eingreift und mit diesem in horizontaler Wirkrichtung formschlüssig gekoppelt ist.

Weitere Merkmale und Vorteile ergeben sich aus der nachfolgenden Beschreibung und aus den nachfolgenden Zeichnungen, auf die Bezug genommen wird.

In den Zeichnungen zeigen:
- Figur 1 eine Längsschnittansicht durch die erfindungsgemäße Führungsmechanik in der ausgestellten Position,
- Figur 2 eine Längsschnittansicht durch die erfindungsgemäße Führungsmechanik in der Grundposition,
- Figur 3 eine Längsschnittansicht durch die erfindungsgemäße Führungsmechanik in der abgesenkten Position,
- Figur 4 eine vergrößerte Detailansicht des hinteren Endes der Führungsmechanik in der Grundposition,
- Figur 5 eine Draufsicht auf einen Abschnitt der Führungskulisse und der Profilschiene im Bereich des vorderen Endes der Führungskulisse,
- Figur 6 a und 6b Schnittansichten längs der Linien A-A bzw. B-B in Figur 5,
- Figur 7 eine perspektivische Ansicht der Lagerung der Wasserablaufrinne mit daran befestigtem Rasthaken,
- Figur 8 den Rasthaken samt einer Blattfeder und einem mit angespritzten Formstück.

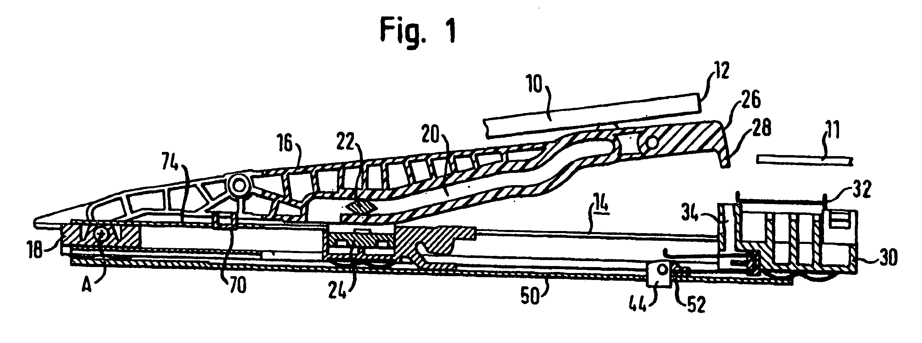

In Figur 1 ist die Führungsmechanik für den Deckel 10 eines Fahrzeugschiebehebedachs in einer Ansicht seitlich zum Fahrzeug dargestellt. Die Führungsmechanik dient dazu, den Deckel 10 in die verschiedenen Positionen zu bringen, nämlich in die ausgestellte Position, in die Grundposition (auch geschlossene Stellung genannt) und in die abgesenkte Position, in der der Deckel samt der gesamten Führungsmechanik nach hinten gefahren wird und unter das Dach taucht. Mit 11 ist der Dachrand bezeichnet, der den Dachausschnitt begrenzt. Mit 12 ist der hintere Rand des nur ganz schematisch dargestellten Deckels bezeichnet.

Die Führungsmechanik ist an beiden Seiten des Deckels 10 im wesentlichen identisch ausgebildet, weshalb in Figur 1 die Führungsmechanik nur an einer Seite dargestellt ist. Die Führungsmechanik umfaßt auf jeder Seite des Dachausschnitts eine C-förmige Profilschiene 14, die am Rand des Dachausschnitts starr befestigt ist und die in den Figuren ohne den üblicherweise integrierten Wasserablaufkanal dargestellt ist. Ein Hebel in Form einer Führungskulisse 16 aus einem Einkomponenten-Kunststoff ist mit dem Deckel 10 mittelbar oder unmittelbar gekoppelt und am gegenüberliegenden Ende in einem vorderen Gleitschuh 18 schwenkbar aufgenommen. Mit A ist die Schwenkachse der Führungskulisse 16 bezeichnet. Die Führungskulisse 16 besitzt auf jeder ihrer beiden Seitenflächen eine Kulissenbahn 20, wobei beide Kulissenbahnen 20 identisch ausgeführt sind, so daß es ausreicht, nur eine darzustellen. In jeder Kulissenbahn 20 läuft ein Kulissenstein in Form einer Nase 22, die über einen hinteren Gleitschuh 24 verfahren werden können. Der Gleitschuh 24 ist über einen Kabelantriebsmechanismus horizontal verfahrbar. Der vordere und der hintere Gleitschuh 18, 24 sind im Inneren der Profilschiene 14 längsverschieblich aufgenommen. Am hinteren Rand 26 der Führungskulisse 16 ist eine nach unten weisende Nase 28 einstückig angeformt. Unterhalb der Nase 28 ist in der Profilschiene 14 horizontal verschieblich ein Lagerteil 30 aufgenommen, das eine Wasserablaufrinne 32 trägt. Lagerteil 30 und Wasserablaufrinne 32 stellen eine separate, vormontierte Einheit dar. Unmittelbar unterhalb der Nase 28 besitzt das Lagerteil 30 eine der Nase 28 angepaßte Ausnehmung 34.

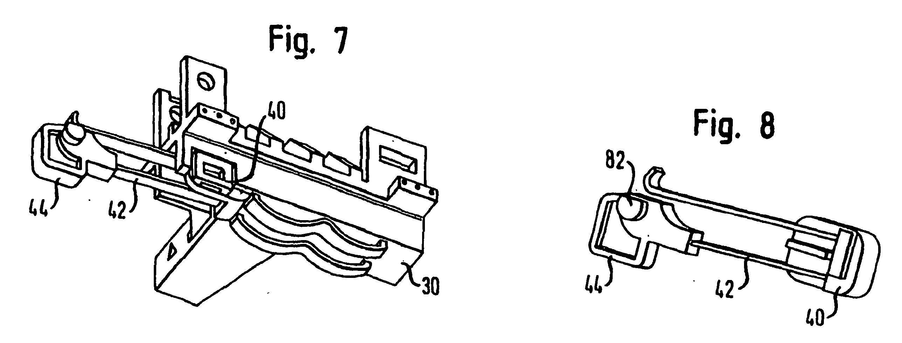

Unterhalb der Ausnehmung 34 wiederum hat das Lagerteil 30 eine seitliche Aufnahmeöffnung für ein Formstück 40, das über eine U-förmige Blattfeder 42 mit einem Rasthaken 44 verbunden ist. Formstück 40, Blattfeder 42 und Rasthaken 44 stellen eine vormontierte Einheit dar (Figur 8), die dadurch hergestellt wird, daß an die Blattfeder 42 das Formstück 40 und der Rasthaken 44 angespritzt werden.

Wie in den Figuren 1 und 7 zu sehen ist, steht der Rasthaken 44 im montierten Zustand vom Lagerteil 30 nach vorne ab.

In der Ausstell- und der Grundstellung muß die Position der Einheit aus Deckel 10, Führungskulisse 16 und der mit ihr gekoppelten Teile der Führungsmechanik und der Einheit aus Wasserablaufrinne 32 und ihrer beidseitigen Lagerteile 30 festgelegt sein. Eine Horizontalverschiebung muß verhindert werden.

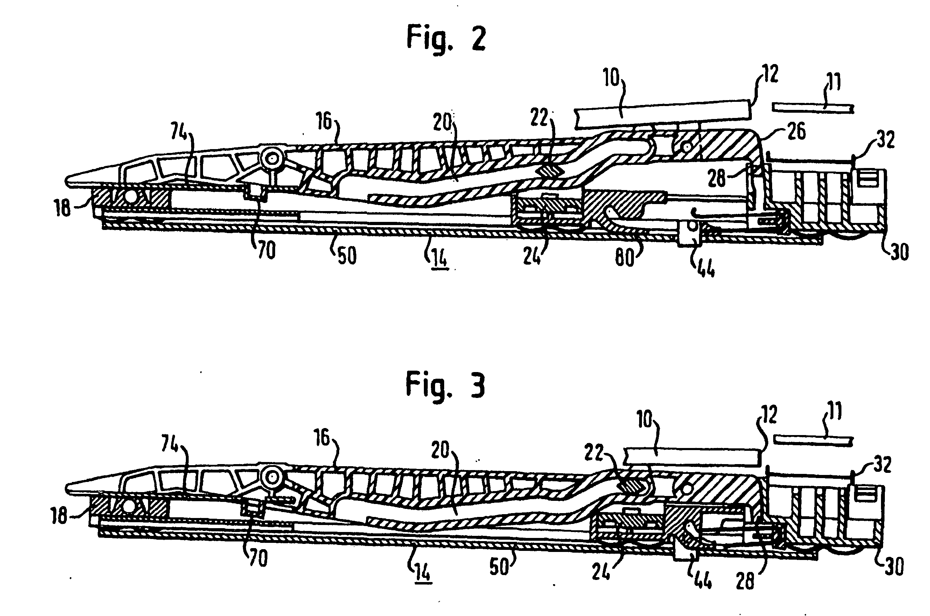

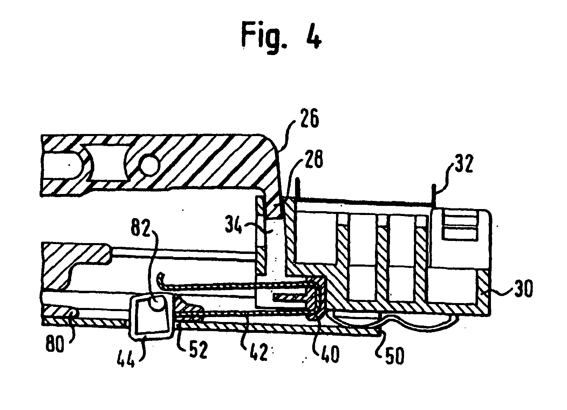

In der Ausstell- und der Grundposition hat die Profilschiene 14 in ihrem unteren Verbindungssteg 50 eine lokale Ausnehmung 52, in die der Rasthaken 44 eindringt (siehe Figuren 1 und 2), da der Rasthaken 44 durch die Blattfeder 42 nach unten kraftbelastet ist. Durch den Rasthaken 44 wird somit die Position der Wasserablaufrinne 32 horizontal gesichert (siehe auch Figur 4).

Die horizontale Lagefixierung der anderen Einheit, nämlich des Deckels 10 samt der Führungskulisse 16 und der Gleitschuhe 18, 24 erfolgt durch eine formschlüssige Verriegelung unmittelbar zwischen der Führungskulisse 16 und der Profilschiene 14. Nahe ihrer Schwenkachse A hat die Führungskulisse 16 nämlich an ihren Seitenflächen seitlich abstehende, einstückig angeformte Fortsätze 70 (siehe Figuren 1 bis 3, 5 und 6a und 6b), die in zugeordnete lokale Ausnehmungen 72 in den oberen Stegen 74 der Profilschiene 14 ragen. Die Fortsätze 70 sind so positioniert und so hoch, daß sie sowohl in der ausgestellten als auch in der Grundstellung (Figuren 1 und 2) in die Ausnehmungen 72 ragen und an den Stegen 74 anschlagen würden, wenn versucht werden würde, die Führungskulisse 16 und damit auch den Deckel 10 horinzontal in eine Richtung zu verschieben. Die Fortsätze 70 sind aber andererseits so positioniert, daß sie in der abgesenkten Position unter die Stege 74 tauchen und vollständig in dem von der Profilschiene 14 umschriebenen Raum liegen (siehe Figur 3).

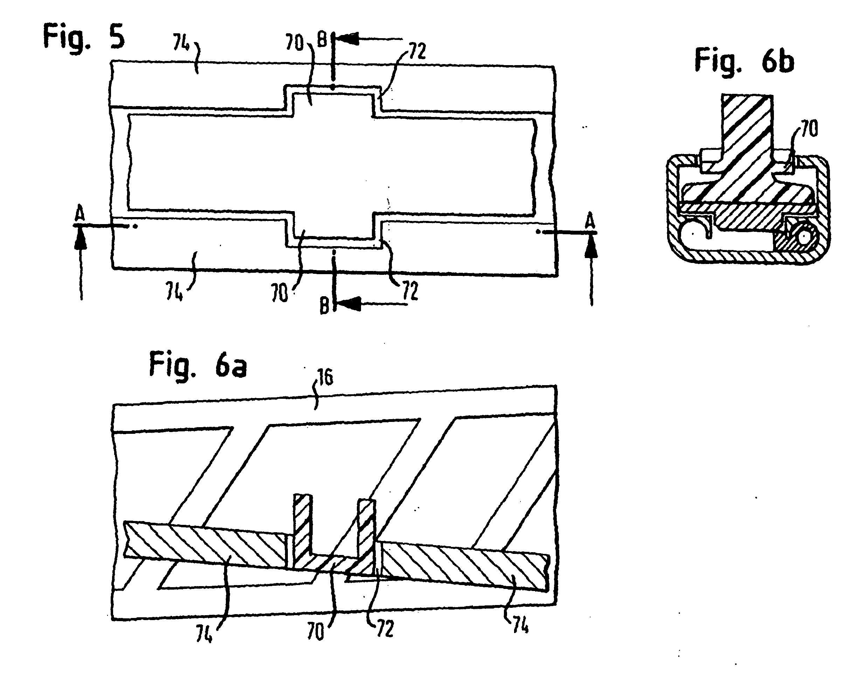

Die Funktionsweise der erfindungsgemäßen Führungsmechanik wird im folgenden erläutert. In der Grundstellung ragen die Fortsätze 70 in die Ausnehmung 72 (Figuren 2, 6), so daß die Führungskulisse 16 an jeder horizontalen Verschiebung längs der Profilschiene 14 gehindert ist. Die Nase 28 ragt in ihre zugeordnete Ausnehmung 34, so daß die durch die Führungskulisse 16 definierte Einheit mit der durch die Wasserablaufrinne 32 definierten Einheit in Verschieberichtung formschlüssig gekoppelt ist. Der Rasthaken 44 ragt in die Ausnehmung 52 (Figur 4), so daß in der Grundstellung eine zusätzliche Sicherung vorhanden ist.

Soll der Deckel 10 ausgestellt werden, so wird der Gleitschuh 24 nach vom verfahren, vorzugsweise motorisch. Durch die Nase 22, die in der Kulissenbahn 20 entlanggleitet, wird die Führungskulisse 16 nach oben geschwenkt (Figur 1). In der voll ausgestellten Stellung ist die die Führungskulisse 16 und den Deckel 10 umfassende Einheit vollständig von der die Wasserablaufrinne 32 aufweisende Einheit mechanisch entkoppelt, da die Nase 28 aus der Ausnehmung 34 herausgetreten ist. In dieser Stellung werden diese beiden Einheiten durch die ihr zugeordneten Fortsätze 70 bzw. dem Rasthaken 44, d.h. durch eigene Positionssicherungen, gegen horizontales Verschieben gesichert.

Soll der Deckel 10 nach hinten verfahren werden, muß sein hinterer Rand 12 unter den Rand 11 abtauchen. Der Gleitschuh 24 wird deshalb nach hinten verfahren (Figur 3). In der abgesenkten Stellung tauchen die Fortsätze 70, wie bereits erläutert, unter die Stege 74 (Figur 3). Der Gleitschuh 24 wird weiter nach hinten verfahren, so daß ein an ihm zum Rasthaken 44 ragender keilförmiger Fortsatz 80 (siehe Figuren 2 und 4) an seitlichen Mitnehmernasen 82 am Rasthaken 44 angreift und diesen nach oben in eine ausgerückte Stellung bringt. Nun können die beiden miteinander gekoppelten Einheiten zusammen horizontal verfahren werden.

## Patentansprüche

1. Führungsmechanik für einen Deckel (10) eines Schiebehebedachs, mit wenigstens einer mit dem Deckel (10) zumindest indirekt gekoppelten, die Vertikalbewegung des Deckels (10) hervorrufenden Führungskulisse (16), die zwischen einer Ausstell-, einer Grund- und einer abgesenkten Position bewegbar ist, und mit
wenigstens einer Profilschiene (14), längs der die Führungskulisse (16) samt Deckel (10) horizontal verfahrbar ist,
wobei die Führungskulisse (16) in ihrer Ausstellposition direkt mit der Profilschiene (14) formschlüssig so verriegelt ist, daß die Führungskulisse (16) an einer Horizontalverschiebung gehindert ist
**dadurch gekennzeichnet,**
**daß** im Bereich des hinteren Randes (12) des Deckels (10) eine quer zum Fahrzeug verlaufende Wasserablaufrinne (32) vorgesehen ist, welche mit einem längs der Profilschiene (14) verschiebbaren hinteren Lagerteil (30) verbunden ist, wobei das Lagerteil samt Wasserablaufrinne (32) in der Ausstellposition in horizontaler Richtung vollständig von der Führungskulisse (16) entkoppelt ist und eine eigene Positionssicherung in Verschieberichtung hat.

2. Führungsmechanik nach Anspruch 1, **dadurch gekennzeichnet, daß** die Führungskulisse (16) auch in der Grundposition direkt mit der Profilschiene (14) formschlüssig so verriegelt ist, daß die Führungskulisse (16) an einer Horizontalverschiebung gehindert ist.

3. Führungsmechanik nach Anspruch 1 oder 2, **dadurch gekennzeichnet, daß** die Führungskulisse (16) in der abgesenkten Position aus dem verriegelnden Eingriff in die Profilschiene (14) herausbewegt ist.

4. Führungsmechanik nach einem der vorhergehenden Ansprüche, **dadurch gekennzeichnet, daß** die direkte Verriegelung zwischen der Führungskulisse (16) und der Profilschiene (14) in der Ausstellposition die einzige Sicherung gegen horizontales Verschieben der Führungskulisse (16) nach hinten ist.

5. Führungsmechanik nach einem der vorhergehenden Ansprüche, **dadurch gekennzeichnet, daß** die Führungskulisse (16) wenigstens einen Fortsatz (70) hat, der zum Verriegeln in eine lokale Ausnehmung (72) in der Profilschiene (14) eingreift.

6. Führungsmechanik nach Anspruch 5, **dadurch gekennzeichnet, daß** die Führungskulisse (16) im Bereich ihres vorderen Endes eine Schwenklagerung hat und der Fortsatz (70) nahe des vorderen Endes vorgesehen ist.

7. Führungsmechanik nach Anspruch 5 oder 6, **dadurch gekennzeichnet, daß** die Profilschiene (14) ein C-förmiges Profil mit oberen, aufeinander zulaufenden Stegen (74) besitzt, wobei mindestens ein Steg (74) die lokale Ausnehmung (72) hat.

8. Führungsmechanik nach einem der Ansprüche 5 bis 7, **dadurch gekennzeichnet, daß** der Fortsatz (70) in der abgesenkten Position in den durch die Profilschiene begrenzten Raum eingedrungen ist und daß nach einem horizontalen Verschieben der Führungskulisse (16) die Profilschiene den Fortsatz (70) an einer vertikalen Ausstellbewegung hindert.

9. Führungsmechanik nach einem der vorhergehenden Ansprüche, **dadurch gekennzeichnet, daß** die Führungskulisse (16) in der Grund- und der abgesenkten Position in das Lagerteil (30) eingreift und mit diesem in horizontaler Richtung formschlüssig gekoppelt ist.

## Claims

1. A guide mechanism for a cover (10) of a sliding/tilting roof, comprising
at least one slotted guide (16) that is at least indirectly coupled to the cover (10) and causes the cover (10) to move vertically, the slotted guide (16) being movable between a raised position, an initial position, and a lowered position, and further comprising
at least one profiled rail (14) for horizontal shifting of the slotted guide (16) together with the cover (10) along the profiled rail (14),
the slotted guide (16), in the raised position thereof, being directly locked with the profiled rail (14) with a positive fit such that the slotted guide (16) is prevented from horizontal displacement,
**characterized in that**
in the area of the rear edge (12) of the cover (10) a drain gutter (32) is provided that extends transversely to the vehicle and is connected with a rear bearing part (30) adapted to be shifted along the profiled rail (14), the bearing part, together with the drain gutter (32), being fully decoupled from the slotted guide (16) in the horizontal direction in the raised position and having a separate arrangement for being locked in position in the direction of displacement.

2. The guide mechanism as claimed in claim 1, **characterized in that** the slotted guide (16) is directly locked with the profiled rail (14) with a positive fit also in the initial position such that the slotted guide (16) is prevented from horizontal displacement.

3. The guide mechanism as claimed in claim 1 or 2, **characterized in that** in the lowered position the slotted guide (16) is moved out of the locking engagement with the profiled rail (14).

4. The guide mechanism as claimed in any of the preceding claims, **characterized in that** the direct locking engagement between the slotted guide (16) and the profiled rail (14) in the raised position constitutes the single arrangement for locking against horizontal rearward displacement of the slotted guide (16).

5. The guide mechanism as claimed in any of the preceding claims, **characterized in that** the slotted guide (16) has at least one extension (70) for locking engagement with a local recess (72) provided in the profiled rail (14).

6. The guide mechanism as claimed in claim 5, **characterized in that** the slotted guide (16) has a pivot bearing in the area of the front end thereof and the extension (70) is provided close to the front end.

7. The guide mechanism as claimed in claim 5 or 6, **characterized in that** the profiled rail (14) has a C-shaped profile with upper converging webs (74), at least one web (74) having the local recess (72).

8. The guide mechanism as claimed in any of claims 5 to 7, **characterized in that** in the lowered position the extension (70) has entered the space defined by the profiled rail and that, after a horizontal displacement of the slotted guide (16), the profiled rail prevents the extension (70) from a vertical rising movement.

9. The guide mechanism as claimed in any of the preceding claims, **characterized in that** in the initial position and in the lowered position, the slotted guide (16) engages in the bearing part (30) and is positively coupled thereto in the horizontal direction.

## Revendications

1. Mécanisme de guidage d'un panneau mobile (10) de toit pivotant et coulissant, comprenant au moins une coulisse de guidage (16), qui est couplée au moins indirectement avec le panneau mobile (10) et suscite le mouvement vertical du panneau mobile (10) et qui est mobile entre une position d'ouverture, une position de base et une position abaissée, et comprenant
au moins un rail profilé (14), le long duquel la coulisse de guidage (16) est mobile horizontalement avec le panneau mobile (10),
la coulisse de guidage (16) dans sa position d'ouverture étant verrouillée par emboîtement directement avec le rail profilé (14) de façon à empêcher un mouvement horizontal de la coulisse de guidage (16),
**caractérisé en ce que**
dans la zone du bord arrière (12) du panneau mobile (10) il est prévu un conduit d'évacuation d'eau (32) orienté transversalement au véhicule, lequel est relié à un élément de palier (30) arrière mobile le long du rail profilé (14), l'élément de palier, y compris le conduit d'évacuation d'eau (32), étant complètement découplé de la coulisse de guidage (16) dans la position d'ouverture dans la direction horizontale et étant muni de sa propre sécurité de positionnement dans le sens du déplacement.

2. Mécanisme de guidage selon la revendication 1, **caractérisé en ce que** la coulisse de guidage (16), dans sa position de base également, est verrouillée par emboîtement directement avec le rail profilé (14) de façon à empêcher un mouvement horizontal de la coulisse de guidage (16).

3. Mécanisme de guidage selon la revendication 1 ou 2, **caractérisé en ce que** la coulisse de guidage (16), dans sa position abaissée, est amenée hors de l'engagement verrouillé dans le rail profilé (14).

4. Mécanisme de guidage selon l'une quelconque des revendications précédentes, **caractérisé en ce que** le verrouillage direct entre la coulisse de guidage (16) et le rail profilé (14) dans la position d'ouverture est la seule sécurité contre un mouvement horizontal de la coulisse de guidage (16) vers l'arrière.

5. Mécanisme de guidage selon l'une quelconque des revendications précédentes, **caractérisé en ce que** la coulisse de guidage (16) comporte au moins un prolongement (70) qui, en vue du verrouillage, entre en prise dans un évidement (72) local dans le rail profilé (14).

6. Mécanisme de guidage selon la revendication 5, **caractérisé en ce que** la coulisse de guidage (16), dans la zone de son extrémité avant, comporte un palier pivotant et le prolongement (70) est prévu à proximité de l'extrémité avant.

7. Mécanisme de guidage selon la revendication 5 ou 6, **caractérisé en ce que** le rail profilé (14) a un profil en forme de C avec des ailes (74) supérieures dirigées l'une vers l'autre, au moins une aile (74) comportant l'évidement (72) local.

8. Mécanisme de guidage selon l'une quelconque des revendications 5 à 7, **caractérisé en ce que** le prolongement (70), dans la position abaissée, est engagé dans l'espace délimité par le rail profilé et **en ce que**, après un mouvement horizontal de la coulisse de guidage (16), le rail profilé empêche le prolongement (70) d'effectuer un mouvement d'ouverture vertical.

9. Mécanisme de guidage selon l'une des revendications précédentes, **caractérisé en ce que** la coulisse de guidage (16), dans la position de base et la position abaissée, entre en prise dans l'élément de palier (30) et est couplée par conjugaison de forme avec celui-ci dans la direction horizontale.
